# EUROPEAN PATENT SPECIFICATION

(11) **EP 3 597 492 B1**
(45) Date of publication and mention of the grant of the patent: **02.12.2020**
(21) Application number: 19185655.8
(22) Date of filing: 11.07.2019
(51) Int. Cl.: B60S 3/04, C02F 1/44

(54) **AUTOMATIC VEHICLE WASHING SYSTEM**
AUTOMATISCHE FAHRZEUGWASCHANLAGE
SYSTÈME DE LAVAGE AUTOMATIQUE DE VÉHICULE

(30) Priority: 20.07.2018 ES 201830738
(43) Date of publication of application: 22.01.2020
(73) Proprietor: Pérez Otín, Mario, 22004 Huesca (ES)
(72) Inventor: Pérez Otín, Mario, 22004 Huesca (ES); Use Cartie, José Luis, 22004 Huesca (ES)
(74) Representative: Ungria López, Javier

(56) References cited:
- EP-A1- 0 393 308
- ES-A1- 2 130 063
- GB-A- 2 137 149

## Description

### OBJECT OF THE INVENTION

The following invention relates to an automatic vehicle washing system, the essential object of which is to carry out the wash program in two steps, each one of the steps having corresponding independent hydraulic circuits, such that each one of the independent hydraulic circuits incorporates at least one water tank of water at room temperature, a high-pressure pump, a product dispenser and a spray gun for spraying the products onto the vehicles with independent actuation.

### BACKGROUND OF THE INVENTION

There are mainly two systems for automatically washing vehicles, one known as a "car wash tunnel", and the other known as "high-pressure washing", and, by means of a "car wash tunnel", vehicles move through the tunnel or remain stationary, while the different phases are carried out, from the pre-washing, with the ejection of chemical products by means of pressurised sprayers, to washing by applying a soapy mixture, rinsing the aforementioned soapy mixture and then drying.

Automatic car washes with projected foam are not very common due to the multiple drawbacks associated with the same, which are solved by the present invention.

Vehicles located in the "car wash tunnel", after the washing operation, come into contact with a series of brushes that optimise the washing by rubbing and moving the possible solid particles situated on the vehicle body.

The high-pressure washing system is based on a "lance" connected to the corresponding water pipe of the water supply network, or water mixed with other cleaning products, which ejects the washing liquid at high pressures onto the vehicle, while the different cleaning phases of the vehicle are carried out, and as such, the pipe for the liquid is anchored to the ceiling with the corresponding rotating installation.

This high-pressure washing system is usually carried out with hot water and comprises control and selection means, by means of which, in addition to incorporating a money or token receiving device, a keypad is incorporated so that the user can select the different washing phases, and as such, the user selects the phases as the vehicle is being washed, which normally consists of three phases, a first washing phase, a second rinsing phase and a third phase in which osmosed water is applied, to which a fourth phase for applying wax may be added.

On the other hand, it is noteworthy to mention that systems known up to the present for the high-pressure washing of vehicles have different drawbacks, and are thus not entirely optimal to be used for the same. On the one hand, with respect to the application of foams, the same is carried out with compressed air foams that are not efficient, since the hose that releases the liquid foam is free inside the washing bay, said device being incompatible with the rotating arms suspended from the ceiling with which vehicles are washed in said automatic washing bays. This hose for ejecting foams is dragged on the ground, being pulled by the user as they move around their vehicle to clean the same while the washing is being carried out, which can occasionally cause the hose to be caught or lead to the impossibility of dispensing the foam on all of the required parts of the vehicle.

In other cases, for the ejection of the foam, a soap tank is placed below the applicator itself and when water or pressurised air moves through the same, the foam is ejected. Said operation is incompatible with automatic washing bays, since the soap tank would need to be continuously refilled, given that in automatic car wash services, the chemical product must be stored in a larger tank and be injected in the water line according to demand.

Furthermore, these previously mentioned products and application methods have other drawbacks, such as the use of foam soap for producing foam with no detergent, which can only be used in the pre-washing phase, proceeding to carry out a subsequent washing either with another detergent applied at high pressure or by the user using their hands to rub it on with a sponge or brush.

Likewise, in addition to the drawbacks already mentioned, we may add others, such as the use of a single "lance" or spray gun for all of the programs, such that when changing from one program to another, for example, from washing to rinsing, there is a time in which the soapy water continues to come out until the entire pipe is "emptied" and only the rinsing water begins to come out. This way, the farther away the bay is from the technical room, the greater the time in which undesired liquid is coming out, leading to an unnecessary waste, both of the product and of hot water, as well as a nuisance to the user due to the delay existing from the time the user programs the machine for washing to the time the machine provides the service requested by the user.

Likewise, the fact that conventional automatic washing systems use hot water makes it so the water must be heated to a temperature of 60 degrees centigrade, requiring the corresponding installation of a water heater, which, in turn, requires proper maintenance, said hot water affecting the useful life of the hydraulic components of the installation and making both the initial investment in the installation, as well as the maintenance of the same, more expensive.

Moreover, in the washing process contamination occurs between one product and another, since in conventional bays the chemical products are injected in a "collector", based on the washing program chosen by the user, such that all of the products flow into the same water line, leading to contamination in the following situations.
- when the pump is started up, since the depression generated by the water upon initiating the movement absorbs the rest of the products that may be in the nozzles, and;
- when, due to the wear of the material, the nozzles (which in turn are non-return valves) stop working in perfect conditions and allow small amounts of the product in the line to leak. ES-A-2130063 shows the preamble of claim 1.

### DESCRIPTION OF THE INVENTION

The automatic vehicle washing system described in this invention resolves the aforementioned drawbacks existing in the prior art by making use of different lances fixed to the bays for ejecting cleaning fluid onto the vehicle and preventing the contamination between said fluids and the loss of cleaning material in undesirable steps.

To do so, the automatic washing system comprises a first pump which collects water from the water supply network by means of conduits and which pumps it to a filter for separating sediments to eliminate any possible suspended solids or particles the water may have.

Once the sediments have been eliminated from the water, the same is sent to a water softener to reduce or eliminate the calcareous substance and the excess magnesium and calcium salts contained in the water supply network.

This process reduces the possibility of the calcium and magnesium present in the water from interfering with the dissolution of the cleaning products, as well as the possibility of calcium and magnesium being deposited on the pipes or on the elements to be cleaned.

Said water softener ejects the decalcified water and moves it by means of conduits to a first decalcified water tank, wherein part of this water is pumped by a second pump through a first outlet, passing through osmosis filters and then going to a second osmosed water tank.

Once the decalcified water reaches both tanks, the hydraulic circuit is divided into two independent parts, such that the first decalcified water tank is connected to a third pump configured to extract and pump the decalcified water of the first tank, by means of a second outlet, through a first detergent dispenser and pump it to a first spray gun configured to eject the water with detergent onto a vehicle by means of a first arm in a washing bay.

The second tank, of osmosed water, is connected to a fourth pump configured to extract and pump the osmosed water through a second wax and brightener dispenser, and pump it to a second spray gun configured to eject the water with wax and brightener onto the vehicle, through a second arm in a washing bay.

For the operation, the automatic washing system comprises control means consisting of two phases.

A first phase in which decalcified water with high density foam is ejected onto the vehicle to be washed by means of the first spray gun, and a second rinsing and finishing phase, in which the osmosed water is ejected with wax and brightener onto the vehicle to be washed by means of the second spray gun.

To activate the operation thereof, the automatic washing system preferably comprises a mechanism configured to receive and validate an input which turns on the automatic washing system and an emergency button configured to stop the operation of the automatic washing system.

This input which activates the operation of the mechanism can be the insertion of coins or cash, reusable tokens, the entry of an alphanumeric code by means of a keypad, a code reader or the reception of a wireless signal.

In one embodiment, the first spray gun is provided with at least one hole for the entry of air from the outside for the application of decalcified water onto the vehicle by means of spraying. This small hole for the entry of air makes it so that, by means of the "Venturi" effect, air is sucked and incorporated into the detergent which is applied to the vehicle, "fattening up" the foam and providing it with a high density, causing a "mousse effect" that causes it to remain on the body of the vehicle. This also achieves that the spraying of the fluid to be ejected covers a greater surface, reaching a greater space inside the washing bay.

In a preferred embodiment, the first arm and the second arm are attached to the ceiling of the bay, each one of them by the ends thereof by means of which they rotate freely with respect to a shaft perpendicular to the ceiling. This way, the fluid, by being ejected from the upper inner part of the bay, is able to reach all of the parts of the vehicle, which is situated inside the same, being supported by gravity and preventing the hoses ejecting the fluid from being loose inside the bay and needing to be handled by the user in order to carry out the washing.

To ensure that the ejection of the fluid is carried out at an appropriate speed for the use thereof, the third pump works at high pressures, in a range of 65 to 80 bars, and the fourth pump works in a pressure range of 120 and 130 bars. This is due to the fact that the water mixed with foam or with wax and brightener increases the viscosity thereof and requires a high outflow speed to reach all of the necessary spaces.

In a preferred embodiment, and unlike some of the prior art systems described, the automatic washing system proposed does not use water heaters to heat the working fluid, the first tank and the second tank being at room temperature.

To complete the description provided below, and for the purpose of helping to make the features of the invention more readily understandable, the present specification is accompanied by a set of figures which by way of illustration and not limitation represent the most characteristic details of the invention.

### BRIEF DESCRIPTION OF THE DRAWINGS

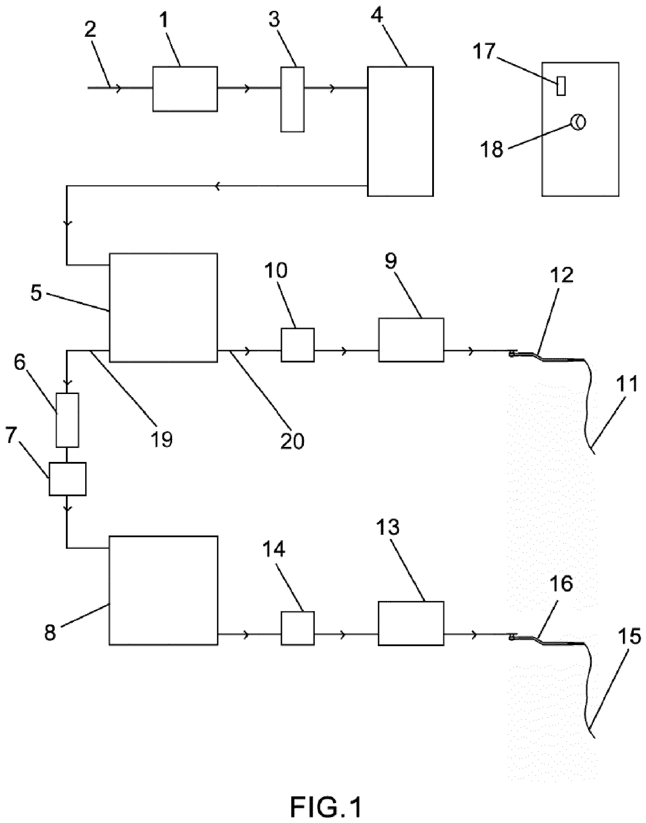

Figure 1. Shows a view of a diagram related to the line of collection, treatment and supply of water and other products to the high-pressure spray guns for ejecting the products onto the vehicles.

### DESCRIPTION OF A PREFERRED EMBODIMENT

In light of the aforementioned figure and according to the numbering used, we can see that, first, the water from the supply is treated to be able to be used for washing vehicles, as is known in the state of the art, such that by means of a first pump (1), connected to the water supply network (2), the water is pumped to a filter for separating sediments (3) that may be picked up, from which the water is then pumped to a water softener (4), and pumped to a first tank (5) of decalcified water at room temperature.

From the first decalcified water tank (5), part of this water is pumped through a first outlet (19) by means of a second pump (6) and passes through osmosis filters (7) to a second tank (8) for osmosed water, also at room temperature, such that the first decalcified water tank (5) and the second osmosed water tank (8) form part of two independent hydraulic circuits for the automatic washing of vehicles.

This way, the automatic washing of vehicles will be carried out in two steps by means of the two independent hydraulic circuits, such that the first tank (5) of decalcified water at room temperature is connected by means of conduits to a third high-pressure pump (9) that works in a range of 65 to 80 bars, which extracts and pumps the decalcified water by means of a second outlet (20) through a first detergent dispenser (10) and pumps the water to a second spray gun (11) through a first arm (12), attached to the ceiling of the washing bay by means of an articulation that allows for the free rotation thereof with respect to a shaft perpendicular to the ceiling.

The second tank (8) of osmosed water at room temperature is connected by means of conduits to a third high-pressure pump (13) that works in a range of 120 to 130 bars, which extracts and pumps the osmosed water through a second wax and brightener dispenser (14) and pumps it to a second spray gun (15) through a second arm (16) also attached to the ceiling of the washing bay by means of an articulation that allows for the free rotation thereof with respect to a shaft perpendicular to the ceiling.

This way, by means of the first spray gun (11) connected to the first decalcified water tank (5), the application of a high density foam with a high degree of detergency onto the vehicles is carried out, and by means of the second spray gun (15) connected to the second tank (8) of osmosed water at room temperature, the rinsing of the vehicle is carried out with waxes and brightener.

Logically, both independent hydraulic circuits have the necessary elements, which are known in the state of the art, such as gate valves to allow for the distribution of fluid through the conduits that connect the different parts of the assembly.

The first spray gun (11) is provided with at least one small hole for the entry of air which, by means of the "Venturi" effect, sucks and incorporates air into the detergent which is applied to the vehicle, creating the foam and providing it with a high density, creating a "mousse effect" that causes it to adhere to the body of the vehicle.

This way, once the money is inserted in the form of coins or bills, or another input that activates the operation of the automatic washing system, such as tokens, the reception of a wireless signal or the introduction of a code by means of a keypad for activation of the same, into the corresponding mechanism (17) for the reception and validation of the input which activates the operation of the automatic washing, in a first stage, the first spray gun (11) is actuated, connected to the first tank (5) of decalcified water at room temperature, as well as to the first detergent dispenser (10), in an immediate way, producing the application of the high-density foam, since the circuit is a single circuit and the product is located at the outlet point of the first spray gun (11).

Once the high-density foam has been applied to the vehicle and the use of the first spray gun (11) has been finished, the second step of washing the vehicle is carried out, based on the rinsing and application of waxes with brightener, and to do so, the second spray gun (15) is actuated which immediately ejects the osmosed water at room temperature together with the waxes and brightener, which is at the outlet point of the second spray gun (15), until the same ceases to actuate or the automatic washing time has run out, controlled by the corresponding control and operating means.

Thus, once the activation of the corresponding mechanism (17) for receiving and validating the input is carried out, the control and operation means are prepared to act by means of the actuation of the spray guns (11 and 15), having an emergency button (18) that may be used in the case of an incident with the hydraulic circuit, such as a rupture, or due to reasons that are unrelated to the operation of the system.

This way, by means of the object of the invention, a series of significant advantages are obtained, such as the fact that by working with water at room temperature, without losing quality in the final result, costs are significantly reduced and, as a result, profits are increased, since:
- the investment associated with the installation of a water heater is avoided;
- costs related to energy consumption for heating water are avoided;
- the maintenance of the same is avoided; and
- the useful life of the hydraulic components is extended, given that hot water is not used.

Other aspects to be taken into consideration are:
- The use by the user, which is carried out in such a way that the operation is comfortable, practical, understandable and efficient, since the user only has to carry out two washing steps and there is no possibility of making a mistake when using a first washing spray gun (11) for applying foam in a first step and a second spray gun (15) for rinsing in a second step. Furthermore, it is not necessary to press any key or actuate any mechanism once the input has been activated, and at the same time the control and operating system detects when the user is using one spray gun or the other, and one is not able to be actuated until the other has stopped being used.
- The final finish is, at least, the same as conventional systems, but by simplifying the washing process and preventing any error by the user, the quality of the washing is notably increased, since with conventional systems, designed for washing with at least three programs, when the complete process is not carried out the finish of the vehicle is deficient, while with the system object of the invention, the same does not occur.
- The product is always available on the outlet of the spray guns (11 and 15) from the initial moment, while in conventional systems there is a delay in the arrival of the products or type of water necessary from the moment the program is requested to the moment it comes out of the spray guns (11 and 15), based on the distance from the outlet to the technical room where the fluid is stored, which could cause a loss of money and time with respect to the entire useful life of the product.
- The machinery can be moved to a greater distance from the washing zone without any loss in pressure or any delay in changing the program, while in conventional systems it is not very effective, as was previously indicated, to have too much distance between the same due to the delays in the application of each program.
- There is never a contamination between the products, since there are two entirely independent circuits each with different outlets.
- By at least the first spray gun (11) being provided with at least one hole for the entry of air to the fluid pipe, due to the "Venturi" effect, the air is sucked, causing the "rupture" of the flow, which carries the detergent, which is projected onto the vehicle, expanding the foam and causing a "mousse" effect, making it so that the same remains on the body of the vehicle due to the adherence thereof so that it does not quickly slide off due to the effect of gravity, and thus, given the degreasing effect thereof, the dirt is able to be removed, regardless of how intense the adherence thereof is, and at the same time neither the chrome nor the paint that is possibly deteriorated is affected.

## Claims

1. An automatic vehicle washing system comprising a first pump (1) for collecting water from the water supply network (2), a filter for separating sediments (3) from the water supply and a water softener (4), **characterised in that** said water softener (4) is configured to eject decalcified water, being pumped through conduits to a first decalcified water tank (5) configured for storing and ejecting decalcified water through a first outlet (19) by means of a second pump (6) through osmosis filters (7) situated between said second pump (6) and a second osmosed water tank (8), wherein, from the first decalcified water tank (5) and from the second osmosed water tank (8) two independent hydraulic circuits of the automatic washing system with control means are created, wherein;
- the first independent hydraulic circuit comprises the first water tank (5) which ejects decalcified water by means of a second outlet (20) by means of the action of a third pump (9) configured to extract and pump the decalcified water of the first tank (5) through a first detergent dispenser (10), situated between the first tank (5) and the third pump (9), and pump it to a first spray gun (11) configured to eject the water with detergent onto a vehicle by means of a first arm (12) in a washing bay;
- the second hydraulic circuit comprises the second osmosed water tank (8), connected to a fourth pump (13), through a second wax and brightener dispenser (14), wherein said fourth pump (13) is configured to extract and pump the osmosed water of the second tank (8), and pump it to a second spray gun (15) configured to eject the water with wax and brightener through a second arm (16) in a washing bay; and
- control means configured for applying a first phase in which decalcified water with high-density foam is ejected onto the vehicle to be washed by means of the first spray gun (11), and a second rinsing and finishing phase, in which the osmosed water is ejected with wax and brightener onto the vehicle to be washed by means of the second spray gun (15).

2. The automatic vehicle washing system, according to claim 1, **characterised in that** it additionally comprises a mechanism (17) configured for receiving and validating an input that activates the operation of the automatic washing and an emergency button (18) configured to stop the operation of the automatic washing system, wherein said input that activates the operation of the mechanism (17) is selected from the group consisting of coins, bills, reusable tokens, introducing an alphanumeric code by means of a keypad, a code reader and receiving a wireless signal.

3. The vehicle washing system, according to claim 1, **characterised in that** the first spray gun (11) is provided with at least one hole for the entry of air from the outside for the ejection of decalcified water onto the vehicle by means of spraying.

4. The vehicle washing system, according to claim 1, **characterised in that** the first arm (12) and the second arm (16) are attached to the ceiling of the bay, each one of them, by one of the ends thereof by means of an articulation, which allows for the rotation of said arms (11 and 12) with respect to a shaft perpendicular to the ceiling.

5. The vehicle washing system, according to claim 1, **characterised in that** the first tank (5) and the second tank (8) are at room temperature.

6. The vehicle washing system, according to claim 1, **characterised in that** the third pump (9) works at pressures in a range of 65 to 80 bars.

7. The vehicle washing system, according to claim 1, **characterised in that** the fourth pump (13) works at pressures in a range of 120 to 130 bars.

## Patentansprüche

1. Automatisches Fahrzeugwaschsystem, das eine erste Pumpe (1) zum Entnehmen von Wasser aus dem Wasserversorgungsnetz (2), einen Filter zum Abscheiden von Sedimenten (3) aus der Wasserversorgung und einen Wasserenthärter (4) umfasst, **dadurch gekennzeichnet, dass** der Wasserenthärter (4) so ausgeführt ist, dass er entkalktes Wasser abgibt, das durch Leitungen zu einem ersten Tank (5) für entkalktes Wasser gepumpt wird, der so ausgeführt ist, dass er entkalktes Wasser speichert und über einen ersten Auslass (19) mittels einer zweiten Pumpe (6) durch Osmose-Filter (7) abgibt, die zwischen der zweiten Pumpe (6) und einem zweiten Tank (8) für Osmosewasser angeordnet sind, wobei von dem ersten Tank (5) für entkalktes Wasser und von dem zweiten Tank (8) für Osmosewasser aus zwei unabhängige Hydraulikkreisläufe des automatischen Waschsystems mit Steuerungseinrichtungen hergestellt werden, und
- der erste unabhängige Hydraulikkreislauf den ersten Wassertank (5) umfasst, der entkalktes Wasser über einen zweiten Auslass (20) mittels der Funktion einer dritten Pumpe (9) abgibt, die so ausgeführt ist, dass sie das entkalkte Wasser des ersten Tanks (5) absaugt und über eine erste Ausgabeeinrichtung (10) für Reinigungsmittel pumpt, die sich zwischen dem ersten Tank (5) und der dritten Pumpe (9) befindet, und es zu einer ersten Sprühlanze (11) pumpt, die zum Abgeben des Wassers mit Reinigungsmittel mittels eines ersten Arms (12) an einem Waschplatz auf ein Fahrzeug ausgeführt ist;
- der zweite Hydraulikkreislauf den zweiten Tank (8) für Osmosewasser umfasst, der mit einer vierten Pumpe (13) über eine zweite Ausgabeeinrichtung (14) für Wachs und Glanzmittel verbunden ist, wobei die vierte Pumpe (13) so ausgeführt ist, dass sie das Osmosewasser des zweiten Tanks (8) absaugt und pumpt und es zu einer zweiten Sprühlanze (15) pumpt, die zum Abgeben des Wassers mit Wachs und Glanzmittel mittels eines zweiten Arms (16) an einem Waschplatz auf ein Fahrzeug ausgeführt ist;
- eine Steuerungseinrichtung, die so ausgeführt ist, dass sie eine erste Phase, in der entkalktes Wasser mit hochdichtem Schaum auf das zu waschende Fahrzeug mittels der ersten Sprühlanze (11) abgegeben wird, und eine zweite Spül-und-Finish-Phase ausführt, in der das Osmosewasser mit Wachs und Glanzmittel mittels der zweiten Sprühlanze (15) auf das zu waschende Fahrzeug abgegeben wird.

2. Automatisches Fahrzeugwaschsystem nach Anspruch 1, **dadurch gekennzeichnet, dass** es zusätzlich einen Mechanismus (17), der zum Empfangen und Validieren einer Eingabe ausgeführt ist, mit der der Betrieb des automatischen Waschsystems aktiviert wird, und einen Notfallknopf (18) umfasst, der zum Unterbrechen des Betriebs des automatischen Waschsystems ausgeführt ist, wobei die Eingabe, mit der die Funktion des Mechanismus (17) aktiviert wird, aus der Gruppe ausgewählt wird, die aus Münzen, Banknoten, wiederverwendbaren Wertmarken, Eingeben eines alphanumerischen Codes mittels eines Tastenfeldes, eines Codelesers sowie Empfangen eines drahtlosen Signals besteht.

3. Fahrzeugwaschsystem nach Anspruch 1, **dadurch gekennzeichnet, dass** die erste Sprühlanze (11) mit wenigstens einem Loch für den Eintritt von Luft von außen zum Abgeben von entkalktem Wasser auf das Fahrzeug mittels Sprühen versehen ist.

4. Fahrzeugwaschsystem nach Anspruch 1, **dadurch gekennzeichnet, dass** der erste Arm (12) und der zweite Arm (16) jeweils über eines der Enden derselben mittels eines Gelenks an der Decke des Waschplatzes angebracht sind, das die Drehung der Arme (11 und 12) in Bezug auf eine Welle senkrecht zu der Decke ermöglicht.

5. Fahrzeugwaschsystem nach Anspruch 1, **dadurch gekennzeichnet, dass** der erste Tank (5) und der zweite Tank (8) Raumtemperatur haben.

6. Fahrzeugwaschsystem nach Anspruch 1, **dadurch gekennzeichnet, dass** die dritte Pumpe (9) bei Drücken in einem Bereich von 65 bis 80 bar arbeitet.

7. Fahrzeugwaschsystem nach Anspruch 1, **dadurch gekennzeichnet, dass** die vierte Pumpe (13) bei Drücken in einem Bereich von 120 bis 130 bar arbeitet.

## Revendications

1. Système de lavage automatique de véhicule, comprenant une première pompe (1) destinée à collecter de l'eau provenant du réseau d'alimentation en eau (2), un filtre destiné à séparer les sédiments (3) de l'alimentation en eau et un adoucisseur d'eau (4), **caractérisé en ce que** ledit adoucisseur d'eau (4) est conçu pour éjecter de l'eau décalcifiée qui est pompée à travers des conduits vers un premier réservoir d'eau décalcifiée (5) conçu pour stocker et éjecter de l'eau décalcifiée à travers une première sortie (19) au moyen d'une deuxième pompe (6) à travers des filtres à osmose (7) situés entre ladite deuxième pompe (6) et un second réservoir d'eau osmosée (8), dans lequel, à partir du premier réservoir d'eau décalcifiée (5) et du second réservoir d'eau osmosée (8) sont créés deux circuits hydrauliques indépendants, du système de lavage automatique avec des moyens de commande, dans lequel :
- le premier circuit hydraulique indépendant comprend le premier réservoir d'eau (5) qui éjecte de l'eau décalcifiée au moyen d'une seconde sortie (20) grâce à l'action d'une troisième pompe (9) conçue pour extraire et pomper l'eau décalcifiée du premier réservoir (5) à travers un premier distributeur de détergent (10) situé entre le premier réservoir (5) et la troisième pompe (9), et la pomper vers un premier pistolet de pulvérisation (11) conçu pour éjecter l'eau avec du détergent sur un véhicule au moyen d'un premier bras (12) à un poste de lavage ;
- le second circuit hydraulique comprend le second réservoir d'eau osmosée (8) relié à une quatrième pompe (13), par l'intermédiaire d'un second distributeur de cire et de brillanteur (14), dans lequel ladite quatrième pompe (13) est conçue pour extraire et pomper l'eau osmosée du second réservoir (8) et la pomper vers un second pistolet de pulvérisation (15) conçu pour éjecter l'eau avec de la cire et du brillanteur au moyen d'un second bras (16) à un poste de lavage ; et
- des moyens de commande conçus pour mettre en œuvre une première phase dans laquelle de l'eau décalcifiée, avec de la mousse à haute densité, est éjectée sur le véhicule à laver au moyen du premier pistolet de pulvérisation (11), et une seconde phase de rinçage et de finition, dans laquelle l'eau osmosée est éjectée avec de la cire et du brillanteur sur le véhicule à laver, au moyen du second pistolet de pulvérisation (15).

2. Système de lavage automatique de véhicule, selon la revendication 1, **caractérisé en ce qu'**il comprend en outre un mécanisme (17) conçu pour recevoir et valider une entrée qui active le fonctionnement du lavage automatique et un bouton d'urgence (18) conçu pour arrêter le fonctionnement du système de lavage automatique, dans lequel ladite entrée qui active le fonctionnement du mécanisme (17) est choisie dans le groupe composé de pièces de monnaie, de billets de banque, de jetons réutilisables, de la saisie d'un code alphanumérique au moyen d'un clavier, d'un lecteur de code et de la réception d'un signal radioélectrique.

3. Système de lavage de véhicule, selon la revendication 1, **caractérisé en ce que** le premier pistolet de pulvérisation (11) est pourvu d'au moins un trou destiné à l'entrée d'air provenant de l'extérieur, aux fins de l'éjection d'eau décalcifiée sur le véhicule par pulvérisation.

4. Système de lavage de véhicule, selon la revendication 1, **caractérisé en ce que** le premier bras (12) et le second bras (16) sont fixés chacun au plafond du poste de lavage, par l'une de leurs extrémités, au moyen d'une articulation qui permet la rotation desdits bras (11 et 12) par rapport à un arbre perpendiculaire au plafond.

5. Système de lavage de véhicule, selon la revendication 1, **caractérisé en ce que** le premier réservoir (5) et le second réservoir (8) sont à température ambiante.

6. Système de lavage de véhicule, selon la revendication 1, **caractérisé en ce que** la troisième pompe (9) fonctionne à des pressions comprises dans une plage de 65 à 80 bars.

7. Système de lavage de véhicule, selon la revendication 1, **caractérisé en ce que** la quatrième pompe (13) fonctionne à des pressions comprises dans une plage de 120 à 130 bars.
